# FASCICULE DE BREVET EUROPEEN

(11) **EP 2 935 775 B1**
(45) Date de publication et mention de la délivrance du brevet: **21.03.2018**
(21) Numéro de dépôt: 13818320.7
(22) Date de dépôt: 17.12.2013
(51) Int. Cl.: E21B 47/00, F16L 11/127, G01N 29/11

(54) **ELEMENT DE CONDUITE EQUIPE D'UN SYSTEME DE SURVEILLANCE**
ROHRLEITUNGSELEMENT MIT EINEM ÜBERWACHUNGSSYSTEM
PIPE ELEMENT FITTED WITH A MONITORING SYSTEM

(30) Priorité: 18.12.2012 FR 1262237
(43) Date de publication de la demande: 28.10.2015
(73) Titulaire: Vallourec Tubes France, 92100 Boulogne-Billancourt (FR)
(72) Inventeur: TRILLON, Adrien, 59530 Le Quesnoy (FR); DESDOIT, Emmanuel, 59600 Maubeuge (FR); PETIT, Sébastien, 59239 Thumeries (FR)
(74) Mandataire: Francillout, Matthieu
(86) Numéro de dépôt international: PCT/FR2013/053110
(87) Numéro de publication internationale: WO 2014/096667

(56) Documents cités:
- EP-A1- 1 467 060
- WO-A1-2012/004508
- WO-A2-02/10709
- GB-A- 2 403 009
- GB-A- 2 482 300
- GB-A- 2 489 107
- US-A1- 2001 022 514
- US-A1- 2002 078 759
- US-A1- 2002 134 161

## Description

L'invention a trait à la surveillance, sur le long terme, de conduites destinées à la circulation de fluides, du type de celles réalisées par assemblage mutuel de tubes élémentaires et/ou autres profilés creux.

Les conduites de ce type comprennent par exemple ce que l'on appelle les "risers", qui relient une plate-forme pétrolière au fond marin, les "pipelines", ou "conduites d'hydrocarbures" en français, qui servent notamment à l'acheminement de pétrole et de gaz naturel, ou encore les conduites utilisées pour le transport d'eau à très haute température dans les centrales de production électrique.

Les tubes élémentaires et les conduites formées à partir de ces tubes présentent extérieurement un revêtement, principalement pour les protéger de leur environnement.

La surveillance de ces conduites implique généralement de détecter, localiser et/ou évaluer des défauts dans des parois de la conduite tels que, par exemple, des fissures de fatigue, qui apparaissent sous la forme de fines fissures s'étendant transversalement à la conduite, des piqûres de corrosion, qui prennent la forme de cuvettes sphériques, et toutes sortes d'anomalies qui présentent des caractéristiques géométriques analogues. De tels défauts surviennent généralement à la surface interne de la conduite, mais il existe également des défauts externes. Les soudures qui assurent la liaison des tubes élémentaires entre eux sont des lieux d'un intérêt particulier pour la surveillance d'une conduite, car les défauts s'y forment de manière privilégiée et y sont potentiellement plus dangereux que dans le reste de la conduite.

Sur le long terme, c'est-à-dire sur une durée voisine de celle de la vie de la conduite, on surveille l'apparition de nouveaux défauts et/ou l'évolution de défauts déjà connus, sur les éléments de la conduite eux-mêmes et sur les soudures de liaison. Typiquement, il s'agit de réaliser régulièrement des opérations de contrôle sur l'ensemble de la conduite et de comparer les résultats de ces opérations les uns aux autres.

Aux fins de simplification de l'exposé, on s'intéresse ici au domaine des conduites sous-marines, utilisées dans le domaine de l'offshore. Il est entendu que cela ne limite en rien l'intérêt de l'invention, laquelle peut être utilisée dans le domaine de l'on-shore, en particulier en cas de contraintes similaires à celles qui caractérisent l'offshore, par exemple des difficultés d'accès à la conduite, une tenue dans le temps de ladite conduite, la nature des défauts surveillés et/ou le caractère agressif du milieu ambiant. On peut citer par exemple le cas de conduites enterrées, situées dans des zones à forte radioactivité ou instables, notamment des zones présentant un risque sismique important.

Les conduites mises en place dans le domaine de l'offshore relient le fond marin, sur lequel elles peuvent éventuellement reposer partiellement, à une plateforme en surface.

Il est connu d'utiliser en tant que capteurs des fibres optiques qui courent le long de la conduite, jusqu'à la plate-forme. Les capteurs de type à fibres optiques permettent par exemple d'évaluer des sollicitations mécaniques subies par la conduite, en particulier des contraintes de flexion, ou encore des températures. Si les fibres optiques et capteurs à fibres optiques se révèlent efficaces pour surveiller la tenue mécanique de la conduite dans son ensemble ou encore pour mesurer la température de la conduite, on ne sait pas les employer pour détecter des défauts du type précité.

Pour ces derniers, on emploie des capteurs agencés pour émettre ce que l'on appelle des ondes acoustiques "guidées", qui se propagent le long de la conduite et dont le comportement va être perturbé en présence de singularités géométriques, en particulier de défauts. En étudiant les échos résultant de ces ondes acoustiques, on peut détecter l'existence d'un défaut et, par comparaison avec des échos préalablement enregistrés, qualifier son évolution dans le temps.

On qualifie de "guidées" les ondes qui se propagent selon une direction privilégiée tandis que leur énergie reste limitée dans une zone bornée dans les directions transversales à cette direction de propagation.

Pour le contrôle de produits métalliques allongés, en particulier des tubes, on utilise notamment des ondes mécaniques, par exemple des ondes de torsion, que l'on fait se propager parallèlement à la direction longitudinale des produits.

Les ondes guidées sont le plus souvent générées au moyen d'impulsions mécaniques transmises d'un capteur au produit métallique à contrôler.

Le document "Permanently Installed Monitoring System Overview" de Guided Ultrasonic Ltd divulgue un système d'inspection à base d'un capteur ultrasonore. Ce système comprend un transducteur installé de manière permanente en un lieu de la conduite et qui peut être excité pour surveiller toute une longueur de cette conduite. Ce système, dit "g-PIMS", comprend en outre un faisceau, qualifié d'ombilical, qui comporte un câble reliant directement le transducteur ultrasonore à une salle de contrôle sur la plateforme offshore, ou à la surface dans le cas d'une conduite enterrée. Généralement, le câble est libre, et ne suit pas nécessairement la conduite.

Selon les auteurs du document en question, le système g-PIMS rend inutile l'utilisation de robots "ROV", pour "Remotely Operated Vehicle", ou "véhicule télécommandé" en français, et autres opérations de plongée, très coûteux. Ce système permet de comparer des données récoltées peu après l'immersion de la conduite à des données acquises par le même capteur une ou plusieurs années plus tard. Les auteurs du document considèrent que leur système permet de vérifier l'intégrité de la conduite sur le long terme.

Le document "Technology Insight Inspection of Subsea & Un-piggable Pipelines" de Subsea Integrity Group, ou SIG en bref, divulgue des variantes et/ou compléments au système g-PIMS. Il s'agit notamment d'équipements de plongée pour le déploiement du système, d'un transducteur annulaire logé dans un moule époxy avec un cordon ombilical qui coure le long de la surface de la conduite, ou encore de robots ROV équipés de manière à permettre de telles inspections.

US 2001/022514 décrit un dispositif à base de capteurs magnétostrictifs pour l'inspection d'une structure à court-terme ou long-terme. Le capteur est positionné sur la périphérie d'un tube à inspecter.

EP 1 467 060 au nom de Halliburton décrit un dispositif à base de capteurs piézoélectriques fins et flexibles collés sur la surface extérieure d'un élément tubulaire de puits.

US 2002/078759 décrit un appareil de mesure de contraintes au moyen de capteurs ultrasonores montés sur un châssis couplé à l'élément à inspecter.

Par ailleurs, le document WO 02/093155 A1, au nom de Southwest Research Institute, divulgue un système à base de capteurs magnétostrictifs. Ces capteurs, généralement au nombre de quatre, sont montés autour d'une conduite qui se trouve enterrée. Chaque capteur est relié individuellement à une boîte de jonction située en surface.

Dans les technologies ci-dessus, chaque capteur est relié individuellement, par un câble compris dans le faisceau "ombilical", à une électronique de commande située en surface. Du fait des difficultés à relier chaque capteur à une électronique de commande, à installer le ou les capteurs sur la conduite d'une façon qui permette à la fois leur bon fonctionnement et leur tenue dans le temps, ou encore à alimenter en énergie ces capteurs, les technologies en question prévoient soit un unique capteur, soit plusieurs capteurs regroupés en un même lieu de la conduite. Cela limite ces technologies à un fonctionnement à basses fréquences, typiquement inférieures à 60 kilohertz, le seul à autoriser l'inspection de longueurs importantes de conduites, pouvant atteindre plusieurs centaines de mètres, lorsque le bruit de fond est faible. Lorsque le fond de bruit est important, par exemple en présence d'accessoires sur la conduite ou de corrosion généralisée, seules quelques dizaines de mètres, voire quelques mètres, de conduite peuvent être inspectés.

Toutes choses étant égales par ailleurs, l'utilisation de fréquences basses nuit à la détection de défauts de petites dimensions, et en particulier de défauts fins, c'est-à-dire de largeur (dimension selon la direction longitudinale de la conduite) inférieure à 1 millimètre. Or les défauts souvent rencontrés dans les soudures comprennent des fissures de fatigues, qui présentent généralement une largeur très fine. Pour détecter des défauts fins, la Demanderesse a constaté qu'il est nécessaire d'utiliser de hautes fréquences, au-delà de 100 kilohertz en particulier.

Dit autrement, plus la fréquence est élevée plus il est l'amplitude de l'écho est importante, mais plus on perd de sensibilité avec la distance séparant le capteur du défaut.

La Demanderesse s'est fixé pour objectif de surveiller la plupart des défauts qui peuvent survenir dans une conduite en développant un système qui soit à la fois simple à intégrer, peu coûteux, facile à alimenter, et qui puisse être installé simplement sur la conduite.

Elle propose un élément destiné à être monté à une extrémité d'une conduite adaptée à la circulation de fluide pour prolonger ladite conduite, l'élément comprenant un corps profilé creux présentant une surface périphérique, un revêtement de protection recouvrant au moins partiellement ladite surface périphérique. L'élément proposé comprend en outre un capteur de type à ondes guidées, une électronique de commande pour le capteur à ondes guidées et au moins un câble électrique agencé pour relier l'électronique de commande à une électronique homologue de ladite conduite. Le câble électrique et le capteur à ondes guidées sont fixés à la surface périphérique dudit corps, sous une partie au moins du revêtement de protection.

Elle propose également une conduite adaptée à la circulation de fluide comprenant des éléments aboutés les uns aux autres et comprenant chacun un corps profilé creux présentant une surface périphérique, un revêtement de protection recouvrant au moins partiellement ladite surface périphérique. Certains au moins desdits éléments comprennent un capteur de type à ondes guidées fixé au corps profilé creux et une électronique de commande pour ce capteur à ondes guidées. La conduite comprend en outre des câbles électriques reliant les électroniques de commande les unes aux autres. Les câbles électriques et les capteurs à ondes guidées sont fixés sur la surface périphérique d'un corps respectif, sous une partie au moins du revêtement de protection.

Elle propose encore un procédé de fabrication de l'élément proposé comprenant la fixation d'au moins un câble électrique et d'un capteur de type à ondes guidées sur une surface périphérique d'un corps profilé creux, l'application d'au moins une couche de revêtement de protection sur le capteur à ondes guidées et le câble électrique, et la fixation d'une électronique de commande pour le capteur à ondes guidées au corps profilé creux et la liaison de cette électronique à une extrémité de l'un au moins des câbles électriques.

Elle propose en outre un procédé pour prolonger une conduite adaptée à la circulation de fluide comprenant un élément terminal comprenant un corps profilé creux présentant une surface périphérique et un revêtement de protection recouvrant en partie au moins la surface périphérique, un capteur de type à ondes guidées et une électronique de commande pour le capteur à ondes guidées, dans lequel un câble électrique est relié l'électronique de commande, le câble électrique et le capteur magnétostrictif étant fixés sur la surface périphérique dudit corps, sous une partie au moins du revêtement de protection. Le procédé proposé comprend la prévision d'un élément prolongateur présentant un corps profilé creux présentant une surface périphérique et un revêtement de protection recouvrant en partie au moins la surface périphérique, un capteur de type à ondes guidées et une électronique de commande pour le capteur à ondes guidées. Un câble électrique est relié l'électronique de commande. Le câble électrique et le capteur magnétostrictif sont fixés sur la surface périphérique dudit corps, sous une partie au moins du revêtement de protection. Puis l'on soude le corps de l'élément prolongateur au corps de l'élément terminal. Enfin, on connecte le câble électrique de l'élément terminal à celui de l'élément prolongateur.

Elle propose enfin un procédé pour former un segment de conduite adaptée à la circulation de fluide comprenant au moins deux éléments de conduite homologues raccordés l'un à l'autre, chacun de ces éléments de conduite homologues comprenant un corps profilé creux présentant une surface périphérique, un revêtement de protection recouvrant au moins partiellement ladite surface périphérique, un capteur de type à ondes guidées et une électronique de commande pour le capteur à ondes guidées, dans lequel au moins un câble électrique relie l'électronique de commande de l'un des éléments de conduite homologues à l'électronique de commande de l'autre de ces éléments de conduite, le câble électrique et les capteurs à ondes guidées étant fixés sur la surface périphérique desdits corps, sous une partie au moins du revêtement de protection. Le procédé comprenant la prévision de deux éléments de conduite homologues présentant chacun un corps profilé creux présentant une surface périphérique, un revêtement de protection recouvrant au moins partiellement ladite surface périphérique, au moins un câble électrique et un capteur de type à ondes guidées, le câble électrique et le capteur à ondes guidées étant fixés sur la surface périphérique dudit corps, sous une partie au moins du revêtement de protection ; le soudage du corps de l'un des éléments homologues au corps de l'autre de ces éléments ; LA connexion du câble électrique des éléments de conduite homologues entre eux, ou les câbles de l'un des éléments de conduite homologues à une l'électronique de commande de l'autre de ces éléments, en une partie de ce câble détachée du corps et/ou qui dépasse du revêtement de protection.

L'élément de conduite proposé peut être contrôlé régulièrement et fréquemment. Il permet une détection efficace non seulement les défauts liés à la corrosion ou de bouchons en formation, mais aussi de défauts liés à la fatigue, en particulier de type fissure, au niveau des soudures, grâce à :
- un capteur à ondes guidées dont on peut tirer un signal de référence, par exemple le signal réfléchi par une soudure sans défaut. Ce signal de référence ne peut pratiquement pas être obtenu par simulation ou prévu d'une quelconque manière, car le signal réfléchi par une soudure, notamment pour des tubes de transport en offshore, est largement influencé par l'existence de bourrelets sur la soudure (internes ou externes) ou de différences de forme entre les tubes soudés entre eux ;
- un capteur relativement proche à chaque fois d'une soudure, typiquement éloigné de moins de 4 mètres, et qui peut être utilisé à de hautes fréquences, plus sensibles aux défauts recherchés ;
- une fois des éléments de conduite assemblés entre eux, des capteurs disposés consécutivement les uns des autres qui permettent de valider la présence d'un défaut par recoupement de données.

L'installation du capteur, préalable à l'assemblage de l'élément de conduite, est peu onéreuse en comparaison du coût d'une fixation *in situ*, en particulier en offshore. Dès lors, il n'existe pratiquement plus de limite au nombre de capteurs que l'on peut installer sur la conduite. On peut rechercher des défauts qui requièrent une courte distance d'inspection (hautes fréquences, sensibilité par rapport à l'atténuation, en particulier pour tubes revêtus). Les capteurs et leur électronique de commande peuvent être calibrés automatiquement, après installation des éléments dans la conduite.

Des ondes guidées sont générées dans le tube, en dessous du revêtement.

Chaque électronique de commande peut être reliée à une électronique voisine pour permettre la remontée d'informations et l'alimentation électrique de l'électronique en question.

Une fois la conduite mise en place, l'utilisation de plusieurs capteurs adjacents permet de couvrir la zone aveugle de chaque capteur. La zone aveugle d'un capteur est généralement comprise entre 30 et 50 centimètres, et peut atteindre, dans certains cas, 1 mètre, de part et d'autre de celui-ci.

L'utilisation de capteurs adjacents et d'électroniques agencées en réseau permet d'obtenir une information sur la distance entre les capteurs. Cette distance est fixe tout au long de la vie de la conduite et peut donc être utilisée avantageusement afin de calibrer la vitesse des ondes guidées se propageant entre les capteurs. Cette information de distance permet de corriger les effets d'éventuelles variations de température et autres phénomènes susceptibles d'altérer la vitesse des ondes dans les tubes. Un coefficient de dilatation/compression peut être calculé entre un signal pris comme référence et un signal ultérieur, de sorte que leur différence permette de mettre en évidence l'apparition ou non d'un pic supplémentaire révélant la présence d'un défaut.

Il est également possible de corriger le gain en réception par rapport à un état de référence donné, pour compenser l'atténuation du signal reçu, avec le temps. Une telle atténuation peut survenir, par exemple, en raison de la corrosion de l'acier, de la perte d'efficacité éventuelle du couplage du capteur, du fait de la viscosité du produit interne transporté ou encore d'une évolution du revêtement.

L'utilisation de capteurs adjacents permet la mise en oeuvre de la technique dite du "pitch catch", selon laquelle un capteur opère en émission tandis qu'un capteur différent fonctionne en réception, pour mesurer une valeur d'atténuation, pour calibrer les capteurs les uns par rapport aux autres, pour détecter la présence d'un défaut par la perturbation d'une onde transmise plutôt que par réflexion, ou encore pour mesurer l'épaisseur résiduelle de la conduite. On peut également vérifier le bon fonctionnement d'un capteur en utilisant un capteur adjacent en écoute.

La localisation d'un défaut, lorsqu'on utilise plusieurs capteurs adjacents, se trouve simplifiée. Il n'est plus nécessaire de faire appel à la technique dite de "direction control", ou "commande de direction" en français.

Il n'est plus nécessaire de mettre en oeuvre la technique dite du contrôle de direction laquelle impose strictement une relation entre la fréquence de travail et la distance entre deux bobines. Dès lors, le capteur peut être constitué d'une seule bobine, ce qui permet à nouveau d'utiliser le capteur à toutes les fréquences souhaitées, sans manipulation.

En utilisant plusieurs capteurs consécutifs, on peut utiliser plusieurs fréquences d'émission sans manipulation de ces capteurs, tout en gardant la possibilité de localiser les défauts.

Certains systèmes classiques prévoient des capteurs à ondes guidées disposés au-dessus du revêtement de la conduite. En offshore, la liaison des capteurs des systèmes classiques implique l'utilisation de moyens sous-marins pour connecter chacun de ces systèmes à un même poste de traitement en surface. Les systèmes classiques étant disposés au-dessus du revêtement, la détection des défauts par ondes guidées n'est pas satisfaisante.

Il arrive que les systèmes classiques soient disposés directement sur l'acier qui constitue le tube. Dans ce cas, il faut retirer une partie du revêtement, fixer le système sur la conduite, au contact de l'acier, et noyé le système en question dans de la résine de type époxy, ce qui s'avère une opération délicate et coûteuse. En pratique, ce mode de fixation est réservé aux tubes qui se trouvent hors de l'eau. Pour les autres, les systèmes devraient être disposés sous le revêtement, ce qui constitue une opération délicate et coûteuse, voire impossible, qui implique d'enlever le revêtement, de fixer le capteur, et de reconstruire le revêtement par-dessus.

Dans l'élément proposé, le faisceau électrique se trouve sous le revêtement, avant les opérations de pose. Les connexions entre les électroniques de tubes adjacents se font lors du soudage de ces tubes, avant ce que l'on appelle la "dépose" dans la technique, c'est-à-dire la mise en place du tube ou de la conduite sur le fond marin ou autre. La connexion ainsi réalisée peut être protégée de la même manière que la soudure, au moyen d'un revêtement réalisé par-dessus la soudure, par exemple du type connu sous le nom de "Field joint coating". Seul le tube situé à l'extrémité de la conduite, qui peut se trouver hors de l'eau, présente une connexion qui le relie au poste de commande et de traitement. Dans le cas où seul un tronçon de la conduite est formé d'éléments du type proposé, l'électronique de commande de l'élément du tronçon le plus proche de la plate-forme, qui peut être immergé, peut être relié à cette plate-forme par l'intermédiaire d'un ombilical.

D'autres caractéristiques et avantages de l'invention apparaîtront à l'examen de la description détaillée qui va suivre, et des dessins annexés, sur lesquels :
- la figure 1 représente un élément de conduite selon l'invention, vu en perspective et partiellement écorché ;
- la figure 2 représente une conduite réalisée à partir d'éléments de la figure 1, vue en perspective et partiellement écorchée ;
- la figure 3 représente un capteur à ondes guidées pour l'élément de conduite de la figure 1, vu en coupe transversale ;
- la figure 4 représente le capteur à ondes guidées de la figure 3, vu en coupe selon une ligne IV-IV ;
- la figure 5 représente un schéma fonctionnel d'un réseau de capteurs ;
- la figure 6 représente un schéma d'architecture d'un boîtier électronique pour l'élément de conduite de la figure 1 ;
- la figure 7 représente un schéma fonctionnel d'une électronique de commande pour l'élément de conduite de la figure 1 ;
- la figure 8 représente un schéma fonctionnel détaillé d'une partie de l'électronique de la figure 7 ;
- la figure 9 représente un schéma fonctionnel détaillé d'une autre partie de l'électronique de la figure 7 ;
- la figure 10 représente un diagramme temporel de tension d'alimentation qui peut être mis en oeuvre dans l'électronique de la figure 7;
- la figure 11 représente un schéma fonctionnel d'un module de traitement pour l'électronique de la figure 7.

Les dessins annexés sont en grande partie de caractère certain. En conséquence, ils pourront non seulement servir à mieux faire comprendre la description détaillée ci-après, mais aussi contribuer à la définition de l'invention, le cas échéant.

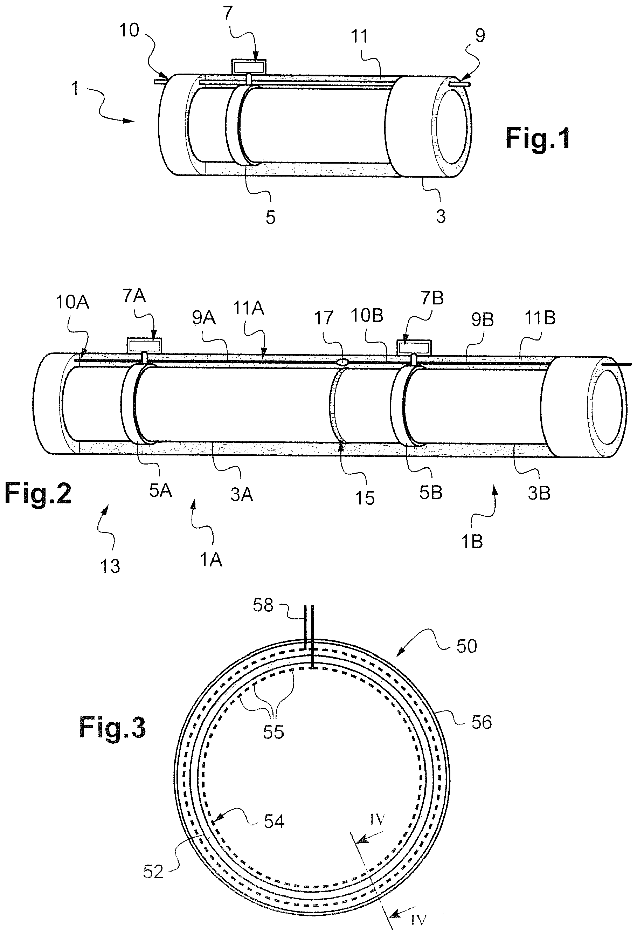

On fait référence à la figure 1.

Un élément de conduite 1 comprend un tube élémentaire 3 nu équipé d'un capteur à ondes guidées 5 qui entoure le tube élémentaire 3 transversalement. Le capteur à ondes guidées 5 est maintenu fixement au contact de la surface extérieure du tube élémentaire 3 par l'intermédiaire d'un médium de fixation. Ici, le médium de fixation comprend une couche de matière adhésive appliquée sur une partie de la surface extérieure du tube élémentaire 3 qui se trouve en regard du capteur à ondes guidées 5.

Le médium de fixation est tel que celui-ci puisse transmettre des impulsions mécaniques du capteur 5 au tube 3, en particulier capable de générer des ondes de torsion dans la paroi du tube élémentaire 3. Le médium de fixation fait fonction de médium de couplage entre le capteur 5 et le tube élémentaire 3. Par exemple, le capteur 5 est collé sur la surface extérieure du tube 3, notamment au moyen d'une colle non conductrice d'électricité, à base de résine époxy, par exemple celle connue sous le nom de "araldite". D'autres matières adhésives peuvent être utilisées, en particulier de type solide et avec un module d'élasticité élevé, typiquement supérieur à 5000 mégapascals.

Les matières adhésives qui peuvent être utilisées comprennent les produits connus sous les noms suivants : Pyroputty 2400 (colle céramique) pour une utilisation à haute température, MP55310 (colle méthacrylate bi-composant) pour une application maritime, Loctite 3455 (colle époxy), adhésif double face mousse acrylique d'épaisseur 0,2, 0,5 ou 0,8 millimètre.

En variante, le capteur 5 peut être attaché au tube au moyen d'une sangle très fermement serrée.

Le médium de fixation permet un contact indirect entre le capteur 5 et la surface extérieure du tube 3.

De préférence, le médium de fixation est tel qu'il agisse aussi comme isolant électrique pour éviter les phénomènes de corrosion galvanique, qui sont susceptibles d'augmenter la corrosion du tube élémentaire 3. Par exemple, le médium de fixation peut comprendre des fibres de verre noyées dans une couche de résine époxy.

Le capteur 5 est fixé à demeure.

Le capteur 5 est disposé par rapport au tube 3 de manière que les ondes qu'il génère se propagent de manière privilégiée selon la direction longitudinale du tube 3. Le capteur 5 se présente sous la forme d'une bande qui ceinture transversalement le tube 3.

Parmi les capteurs capables de produire des ondes guidées, on connaît notamment les capteurs de type piézoélectrique, les capteurs de type magnétostrictif ou encore les capteurs de type électromagnétique acoustique.

Tel que représenté sur la figure 1, l'élément de conduite 1 est prêt à être assemblé avec un élément de conduite analogue pour former un tronçon de conduite.

L'élément de conduite 1 est en outre équipé d'une électronique embarquée 7 qui est maintenue fixement sur le tube élémentaire 3, à la surface extérieure de celui-ci.

L'électronique embarquée 7 assure le fonctionnement du capteur à ondes guidées 5, en émission et/ou en réception. L'électronique embarquée 7 est susceptible d'être raccordée à des électroniques embarquées analogues, équipant des éléments d'une conduite, de manière à permettre une communication de données entre ces électroniques et une alimentation électrique.

L'élément de conduite 1 comprend un premier faisceau électrique 9 et un second faisceau électrique 10. Une extrémité de chacun des faisceaux électriques 9 et 10 est branchée à l'électronique embarquée 7, tandis que, à chaque fois, l'autre extrémité de ces faisceaux se termine à proximité d'une extrémité respective du tube élémentaire 3. Les faisceaux électriques 9 et 10 sont maintenus fixement à la surface du tube élémentaire 3, sur la plus grande partie de leur longueur. Ici, les faisceaux 9 et 10 s'étendent selon une même génératrice du tube élémentaire 3. Toutefois, les faisceaux 9 et 10 peuvent être enroulés autour du tube élémentaire 3, en hélice, pour améliorer leur tenue mécanique. Chacun du faisceau 9 et du faisceau 10 peut être doublé d'un faisceau homologue (non représenté sur les figures), qui agit en tant que faisceau auxiliaire.

L'élément de conduite 1 comprend un revêtement de protection 11 qui recouvre la surface extérieure libre du tube élémentaire 3 et dont une partie au moins recouvre le capteur 5, le premier faisceau électrique 9 et le second faisceau électrique 10. Le premier faisceau 9 et le second faisceau 10 peuvent être noyés dans le revêtement de protection 11, lequel participe alors à la fixation de ces faisceaux par rapport au tube élémentaire 3.

Le revêtement 11 peut comprendre une ou plusieurs couches d'un ou plusieurs matériaux destinés à assurer la protection de l'élément de conduite 1 dans son milieu d'utilisation, en particulier vis-à-vis de phénomènes de corrosion. L'une au moins des couches du revêtement 11 recouvre le capteur 5 et la surface extérieure libre du tube élémentaire 3.

De préférence le revêtement comprend une couche de résine époxy, qui sert notamment à la fixation du capteur 5, et une ou plusieurs couches d'un matériau thermiquement isolant qui recouvrent le capteur 5. Par exemple le revêtement peut comprendre trois couches de protection contre la corrosion et deux couches d'isolation thermique, en particulier dans le cas de températures extérieures très basses comme c'est le cas pour des applications offshore en grande profondeur (supérieure à 2 000 ou 3 000 mètres). Ici, l'épaisseur du revêtement 11 est telle qu'elle permet d'y loger des câbles et/ou une partie du capteur 5. Cette épaisseur est par exemple comprise entre 3 et 10 millimètres.

Le choix de l'épaisseur du revêtement 11 dépend de différents critères. Le plus souvent, c'est l'application envisagée, et plus particulièrement la nature du milieu dans lequel va être placé l'élément de conduite 1, qui détermine la protection à apporter au tube élémentaire 3 et donc la nature et l'épaisseur du revêtement 11. La Demanderesse a constaté que le fait de placer le capteur à ondes guidées 5 sous une partie au moins du revêtement 11 améliorait grandement les performances dudit capteur. Cette amélioration des performances est particulièrement critique lorsque le capteur 5 travaille en réception, car les signaux reçus sont généralement de faible amplitude.

Dans tous les cas, le fait de recouvrir le capteur à ondes guidées 5 d'une partie au moins du revêtement 11 protège le capteur 5.

Le revêtement 11 est par exemple du type connu sous le nom de revêtement 3LPE ou celui connu sous le nom de revêtement 3LPP. Dans ces cas, la première couche du revêtement est avantageusement utilisée en tant qu'adhésif pour la fixation du capteur 5.

Les portions du tube élémentaire 3 proches des extrémités de celui-ci peuvent être dépourvues de revêtement 11 pour faciliter l'assemblage de l'élément de conduite 1 à d'autres éléments conduite, en particulier par soudage.

L'électronique 7 peut être logée, en partie au moins, dans l'épaisseur du revêtement 11.

L'électronique 7 et le capteur 5 sont mutuellement reliés de manière opérative. L'électronique 7 assure l'excitation du capteur 5.

La liaison entre le capteur 5 et l'électronique 7 peut faire intervenir au moins l'un des éléments suivants :
- un ou plusieurs fils ou câbles traversant le revêtement 11 ;
- une ou plusieurs pistes de contact pour relier le capteur à une surface métallisée du revêtement, elle-même reliée à l'électronique 7 ;
- une ou plusieurs prises plates, éventuellement collées au revêtement 11 ;
- une liaison sans fil, par exemple au moyen d'une boucle à induction.

L'électronique 7 peut être fixée au tube élémentaire 3, par exemple au moyen d'une pièce intermédiaire formant un plat. De préférence, le plat comporte des prises de connexion pour relier l'électronique 7 au capteur 5. La pièce intermédiaire peut également prendre la forme d'une ceinture, enroulée autour du tube 3.

Ici, le capteur 5 équipant l'élément de conduite 1 est disposé à proximité de l'une des extrémités du tube élémentaire 3, ce qui permet de distinguer les échos respectivement produits par les soudures d'extrémités et donc de localiser un défaut. Par exemple, lorsque le tube élémentaire 3 présente une longueur de 12 mètres, la Demanderesse a constaté qu'il était judicieux de disposer le capteur à ondes guidées 5 à environ 2,2 mètres de l'une des extrémités du tube élémentaire 3.

De manière générale, il est avantageux de disposer le capteur au plus près de l'extrémité de l'élément de conduite 1 pour mieux localier les défauts qui pourraient se présenter dans une soudure réalisée à cet endroit. Cependant, les opérations de soudage qui sont susceptibles d'endommager le capteur 5 et l'existence d'une zone proche du capteur dans laquelle celui-ci est "aveugle" font qu'il n'est pas opportun de disposer le capteur trop près de cette extrémité. Par exemple le capteur peut être disposé à une distance supérieure à 30 centimètres de l'une des extrémités du tube élémentaire 3.

Le repérage d'un écho de soudure proche permet également, en connaissant la distance d'installation du capteur par rapport à son extrémité, par exemple 2,2 mètres, d'estimer la longueur des tubes et la distance entre chaque capteur. Ces grandeurs permettent ensuite de localiser les défauts détectés. La longueur des tubes et/ou la distance entre les capteurs peuvent également être connus par d'autres moyens, par exemple un plan d'assemblage.

L'élément de conduite 1 peut être fabriqué en fixant d'abord le faisceau électrique et le capteur à ondes guidées 5 sur la surface périphérique du tube élémentaire 3, puis en appliquant au moins une couche de revêtement de protection sur le capteur à ondes guidées et le faisceau. Enfin, on fixe l'électronique de commande pour le capteur 5 au corps profilé creux et on la relie à une extrémité du faisceau.

Avant la fixation du capteur 5, la surface périphérique du tube élémentaire 3 peut être recouverte d'un revêtement de protection à l'exception d'au moins une zone annulaire, le câble électrique étant recouvert du revêtement de protection. On fixe ensuite le capteur de type à ondes guidées sur la surface périphérique dudit corps, en ladite zone annulaire.

On fait référence à la figure 2.

Un tronçon, ou segment, de conduite 13 a été réalisé par assemblage mutuel des extrémités adjacentes d'un premier élément de conduite 1A, du type de l'élément de conduite 1 de la figure 1, et d'un second élément de conduite 1B, analogue. Ici, l'assemblage fait intervenir un cordon de soudure 15 qui réalise une jonction étanche des extrémités en vis-à-vis des tubes élémentaires 3A et 3B.

Une jonction électrique 17 assure une connexion mutuelle du premier faisceau électrique 9A du premier élément de conduite 1A et du second faisceau électrique 10B du second élément de conduite 1B. La jonction électrique 17 peut prendre la forme d'un connecteur plat ou encore d'une soudure entre les extrémités respectives des faisceaux électriques.

Dans le tronçon de conduite 13, des capteurs à ondes guidées 5A et 5B équipant les éléments de conduite 1A et 1B sont commandés par des électroniques embarquées respectives 7A et 7B, qui sont reliées entre elles par l'intermédiaire du second faisceau 10B et du premier faisceau 9A de manière à échanger entre elles des données et de l'énergie électrique.

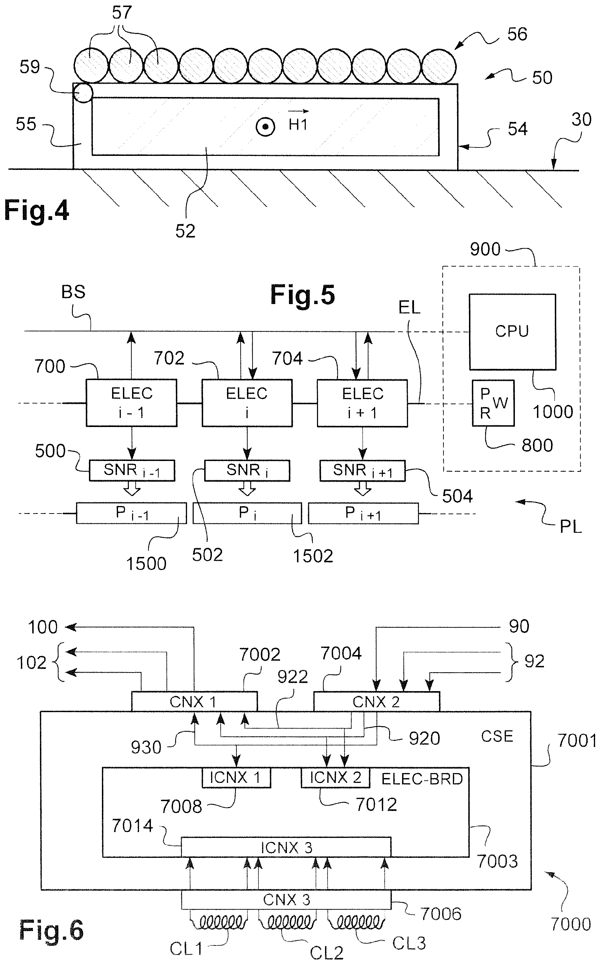

On fait référence aux figures 3 et 4.

Un capteur magnétostrictif 50 peut être utilisé en tant que capteur à ondes guidées 5 pour un élément de conduite. Le capteur magnétostrictif 50 comprend une section de bande en matériau magnétostrictif 52, ici de section transversale sensiblement rectangulaire. La bande magnétostrictive 52 peut notamment être réalisée à partir de fer par exemple allié de nickel, par exemple allié de cobalt. Par exemple, la bande magnétostrictive 52 est obtenue à partir du matériau connu sous le nom de Hiperco50HS de la société Cartech ou encore de celui connu sous le nom de AFK502R de la société Arcelormittal, traités thermiquement. Elle peut présenter la composition (massique) suivante :
Fer Fe : 48,8 %,
Cobalt Co : 49 %,
Vanadium V : 2 %,
Niobium Nb : 0.2 %

Et les propriétés suivantes (après traitement thermique) :
Déformation relative à la saturation par magnétostriction : 60.10-6 pouce
Température de Curie : 938°C
Module d'Young : 73 Ksi

D'autres matériaux magnétostrictif peuvent être utilisés comme un alliage de Nickel ou du type connu sous le nom de Terfenol-d.

Le capteur 50 comprend une première bobine 54 dont chaque enroulement 55 entoure transversalement la section de bande magnétostrictive 52. La section de bande magnétostrictive 52 est disposée à l'intérieur de la première bobine 54, de manière telle que la direction de l'enroulement de la première bobine 54 coïncide sensiblement avec la direction longitudinale de la section de bande magnétostrictive 52.

La première bobine 54 peut être réalisée en enroulant un fil conducteur 59 (figure 4) isolé autour de la bande magnétostrictive 52 de manière à former les spires 55. Le fil 59 peut être fixé à la bande magnétostrictive 52, au moyen de colle ou de ruban adhésif. En variante, la bande magnétostrictive peut être recouverte d'un isolant et le fil 59, dépourvu de gaine isolante, enroulé à même la bande ainsi recouverte. Dans ce cas, les spires 55 ne sont pas jointives. L'ensemble est dans ce cas revêtu d'une couche de matériau isolant. Le diamètre du fil 59 est tel que ce fil 59 puisse supporter des intensités de courant de l'ordre de plusieurs ampères pendant plusieurs secondes sans se détériorer. Dans une autre variante encore, la bobine 54 peut être réalisée dans un circuit souple de type PCB (pour "printed cicuit board", ou "plaque de circuit imprimé" en français)

En alimentant la première bobine 54 par un courant électrique continu, on génère un champ magnétique H1 au sein de la bande magnétostrictive 52, dirigé selon une direction longitudinale de la bande 52. Le champ magnétique H1 peut être utilisé pour magnétiser la section de bande magnétostrictive 52.

Le diamètre du fil 59 est suffisamment fin pour permettre son enroulement en un grand nombre de spires le long de la bande magnétostrictive 52. Le champ magnétique susceptible d'être généré par la première bobine 54 est alors optimal. À titre d'exemple, le fil 59 présente, ici, un diamètre voisin de 0,32 millimètre.

La bande 52 se trouve là où un champ magnétique généré par la première bobine 54 sera le plus fort, à courant constant. Ici, les enroulements 55 sont au contact de la surface extérieure de la section de bande magnétostrictive 52. Ils peuvent être maintenus fixement en cette position relative au moyen de colle ou de ruban adhésif, par exemple.

La section de bande magnétostrictive 52, entourée de la première bobine 54, présente une souplesse qui lui permet d'être enroulée autour d'un tube transversalement à celui-ci. Ici, l'enroulement se fait sur un tour. Chaque spire 55 de la première bobine 54 se trouve partiellement en contact avec la surface extérieure 30 du tube par l'intermédiaire d'une couche de médium de fixation. Les parties de la première bobine 54 au contact avec la surface 30 peuvent y être collées.

La première bobine 54 présente avantageusement dans son ensemble une résistance électrique comprise entre 5 et 50 ohms selon le diamètre de l'élément tubulaire sur lequel elle est installée.

Le capteur magnétostrictif 50 comprend encore une seconde bobine 56, qui est disposée en regard de la section de bande magnétostrictive 52. Ici, les spires 57 de la seconde bobine 56 sont jointives et disposées selon une direction d'alignement qui correspond à une direction transversale de la bande 52.

La seconde bobine 56 peut être appliquée de manière radialement extérieure sur la section de bande magnétostrictive 52 combinée à la première bobine 54. Chaque spire 57 est alors sensiblement concentrique à une section transversale du tube.

Dans une variante de réalisation, le capteur magnétostrictif 50 comprend deux secondes bobines 56 disposées l'une à côté de l'autre. Ceci permet de diriger les d'ondes guidées générées d'un côté ou de l'autre du capteur 50.

Toujours en variante, le capteur 50 peut comprendre deux capteurs élémentaires, chacun constitué d'une bande magnétostrictive 52, d'une première bobine 54 enroulée autour de celle-ci et d'une seconde bobine 56 respective.

La première bobine 54 peut être alimentée par une source capable de délivrer un courant continu de 2 ampères sous 70 à 80 volts pour magnétiser la bande magnétostrictive 52. Ce courant provient de l'électronique embarquée 7.

La première bobine 54 peut également être alimentée en courant de manière à démagnétiser la bande magnétostrictive 52, notamment avant chaque opération de magnétisation en sorte que le même état de magnétisation soit obtenu avant chaque excitation de la bande magnétostrictive.

La seconde bobine 56 peut être alimentée par une source capable de délivrer un courant continu de 30 ampères sous 300 volts pour exciter la bande magnétostrictive 52 avec des fréquences comprises entre 32 et 250 kilohertz.

On fait référence à la figure 5.

Elle fait apparaître une partie générique de ce que l'on peut appeler un réseau de conduites intelligent.

Un tube élémentaire Pi-1 est assemblé à un tube Pi au moyen d'un cordon de soudure 1500. Le tube Pi est assemblé, à son extrémité opposée au tube Pi-1, à un tube Pi +1 au moyen d'un autre cordon de soudure 1502. Ces tubes élémentaires forment une partie d'une conduite de tubes PL.

Le tube Pi-1 est équipé d'un capteur générique SNRi-1 500, et d'une électronique embarquée générique ELECi-1 700 qui commande ce capteur, pour former ensemble un élément de conduite générique.

De manière analogue, le tube Pi est équipé d'un capteur SNRi 502 commandé par une électronique ELECi 702, et le tube Pi+1 est équipé d'un capteur SNRi+1 504 commandé par une électronique ELECi +1 704.

Les tubes élémentaires Pi-1, Pi, Pi+1 de la conduite PL sont chacun du type de l'élément de conduite 1 décrit en relation avec la figure 1, au moins lorsque ces tubes élémentaires sont destinés à être immergés. En particulier, les capteurs SNRi-1, SNRi+1 et SNRi sont recouverts d'un revêtement.

L'électronique embarquée ELECi est reliée d'une part à l'électronique ELECi-1 équipant le tube Pi-1 et, d'autre part, à l'électronique ELECi+1 équipant le tube Pi+1 par l'intermédiaire :
- d'un bus BS pour transmettre des données utiles à la surveillance de la conduite PL à un ordinateur de traitement CPU 1000, par exemple logé dans une salle de commande 900 en surface ou sur une plateforme, et
- d'une ligne d'alimentation électrique EL reliée à une source de courant PWR 800, par exemple logée dans la salle de commande 900.

À partir de capteurs SNRi et d'électroniques de commandes ELECi respectives, reliées entre elles par un bus de données BS et une ligne d'alimentation électrique EL communs, on peut créer un réseau de capteurs répartir sur la longueur de la conduite. Le tronçon de la ligne d'alimentation électrique EL et celui du bus de données BS correspondant aux tubes élémentaires immergés sont recouverts par un revêtement qui recouvre également les capteurs équipant ces tubes et les tubes nus correspondants.

Ce réseau de capteurs permet de contrôler la structure de la conduite PL et de chacun de ses éléments à partir d'une chaîne de capteurs à ondes guidées associés à des boitiers électroniques connectés entre eux électriquement.

Le bus BS peut comprendre un faisceau électrique à quatre brins, éventuellement torsadés, pour la transmission série des informations entre l'ordinateur de traitement 1000 et chacune des électroniques de commande ELECi.

La ligne d'alimentation électrique EL peut comprendre un faisceau électrique comprenant deux brins reliés à une source de courant continu de 24 volts sous 2,5 ampères pour l'alimentation des électroniques de commande ELECi.

Selon les tests réalisés par la Demanderesse, un tel réseau peut atteindre 400 mètres de long. Il est possible de réaliser des réseaux s'étendant sur de plus grandes distances encore. Pour communiquer sur de telles distances, on peut diminuer la vitesse de communication.

Toujours selon les tests de la Demanderesse, il est possible d'instrumenter une conduite de 2 kilomètres de long avec un générateur de 60 watts seulement, c'est-à-dire d'alimenter 200 électroniques de commande, en ayant toujours trois de ces électroniques actives.

On fait référence à la figure 6.

Elle montre un exemple de réalisation d'une électronique de commande 7000 qui peut être utilisée en tant qu'électronique embarquée dans un élément de conduite.

L'électronique 7000 comprend un boîtier CSE 7001 étanche, ici de type IP68 pour empêcher l'intrusion de liquide dans le boîtier 7001, auquel est fixé un premier connecteur CNX1 7002, un deuxième connecteur CNX2 7004 et un troisième connecteur CNX3 7006, chacun de type IP 68 ATEX pour éviter en outre la création d'un étincelle ou la mise en contact de gaz explosif avec une étincelle dans le boîtier.

Chacun du premier connecteur CNX1 7002 et du deuxième connecteur CNX2 7004 comprend une interface de données respective 90, 100, par exemple de type RS 485, et une interface d'alimentation respective 92, 102 comprenant deux lignes électriques délivrant conjointement une tension de travail, par exemple 24 volts continu. La tension de travail permet une consommation assez faible et un faible risque d'explosion, comparé à une tension alternative de 220 volts, par exemple.

Le troisième connecteur CNX3 7006 comprend une interface de connexion électrique avec chacune d'une première bobine CL1, d'une deuxième bobine CL2, et d'une troisième bobine CL3. Par exemple, la première bobine CL1 correspond à une bobine de magnétisation d'un capteur magnétostrictif et la deuxième CL2 et la troisième CL3 bobine correspondent à des bobines d'excitation de ce capteur.

L'interface d'alimentation 92 du deuxième connecteur CNX2 7004 est reliée électriquement à l'interface d'alimentation 102 du premier connecteur CNX1 7002 par deux lignes électriques 920 et 922. L'interface de données 90 du second connecteur CNX2 7004 est reliée en communication de données à l'interface de données 100 du premier connecteur CNX1 7002 par une ligne de données 930.

La ligne de données 930 est connectée à une interface de données d'un premier connecteur interne ICNX1 7008. Les lignes électriques 920 et 922 sont reliées à une interface d'alimentation d'un deuxième connecteur interne ICNX2 7012. Le premier connecteur interne ICNX1 7008 et le second connecteur interne ICNX2 7012 sont attachés à une carte électronique 7003 logée dans le boîtier 7001. La carte électronique ELEC-BRD 7003 est en outre équipée d'un troisième connecteur interne ICNX3 7014 électriquement relié au troisième connecteur externe CNX3 7006.

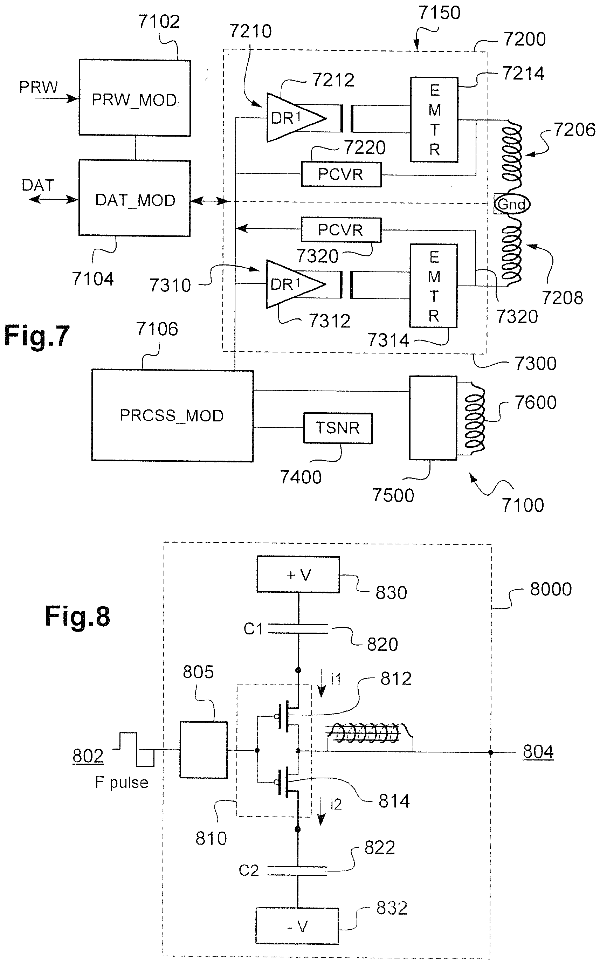

On fait référence à la figure 7.

Elle montre un circuit de commande 7100 pour un capteur à ondes guidées, qui peut être implémenté sur la carte électronique 7003 de la figure 6.

Le circuit de commande 7100 comprend un module d'alimentation 7102, alimenté par un courant continu de 24 volts, tel qu'il est délivré par exemple au deuxième connecteur interne ICNX2 7012 de la figure 6.

La consommation électrique totale de l'électronique peut être réduite à 0,7 W en fonctionnement et à 0,3 W dans une mode veille. Une isolation galvanique est mise en place entre le bus BS et l'électronique principale, par exemple d'au moins 4 kilovolts en moyenne quadratique. Une protection de ± 15 kilovolts contre les décharges électrostatiques est mise en place pour les entrées/sorties.

L'alimentation du circuit de commande 7100 doit être isolée de l'entrée 24 volts. Les tensions de sortie délivrées par le module d'alimentation sont par exemple de 5, 24 et ± 300 volts.

Le circuit de commande 7100 comprend en outre un module de transmission 7104 qui reçoit des données du premier connecteur ICNX1 7008 et émet des données à destination de celui-ci.

Le circuit de commande 7100 comprend un module d'émission/réception 7150 capable de faire opérer un ou plusieurs transducteurs d'un capteur à ondes guidées. Ici, le module d'émission/réception 7150 comprend un premier circuit 7200 destiné à une première bobine 7206 et un second circuit 7300 destiné à une seconde bobine 7208. Le premier circuit 7200 et le second circuit 7300 sont analogues l'un à l'autre, et sont mutuellement raccordés à la sortie d'un module de traitement 7106. La première bobine 7206 et la seconde bobine 7208 sont par exemple des bobines d'excitation d'un capteur magnétostrictif.

Chacun du premier circuit 7200 et du second circuit 7300 comprend une voie d'émission respective 7210, 7310 pour exciter la première bobine 7206 ou la seconde bobine 7208, et une voie de réception 7220, 7320 respective pour les signaux électriques captés à la première bobine 7206 ou la seconde bobine 7208. Les voies d'émission 7210 et 7310 peuvent également être vues comme des circuits d'excitation de la première bobine 7206 et de la seconde bobine 7208, respectivement.

L'entrée de chaque voie d'émission 7210, 7310 est reliée à une sortie du module de traitement 7106. La sortie de chaque voie d'émission 7210, 7310 est reliée à une borne de la première bobine 7206 ou de la seconde bobine 7208.

La sortie de chaque voie de réception 7220, 7320 est reliée à une entrée du module de traitement 7106. L'entrée de chaque voie de réception 7220, 7320 est reliée à la borne en question de la première bobine 7206 ou de la seconde bobine 7208.

Chaque voie d'émission 7210, 7310 comprend un pilote respectif 7212, 7312 dont la sortie est reliée à un circuit émetteur respectif 7214, 7314, dont la sortie est reliée à la borne en question de la première bobine 7206 ou de la seconde bobine 7208.

Le module de traitement 7106 est relié à un capteur de température 7400 disposé à l'intérieur du boîtier 7001, ainsi qu'à un module de magnétisation 7500 relié de manière opérationnelle à une bobine 7600 respective, par exemple une bobine de magnétisation d'un capteur magnétostrictif.

Le module de magnétisation 7500 permet de magnétiser une bande magnétostrictive d'un capteur à ondes guidées. La durée de magnétisation est programmée dans le module de traitement 7106. Typiquement, cette durée est inférieure à 10 ms. De manière analogue, l'intensité du courant délivré peut être programmée dans le module de traitement 7106, par exemple jusqu'à 3ampères. La valeur temporelle du retard entre le début de la magnétisation et le début de l'excitation est également réglable, par exemple entre -1 et +9 millisecondes.

On fait référence à la figure 8.

Elle montre un montage électronique 8000 qui peut être utilisé en tant que circuit émetteur, par exemple pour le circuit émetteur 7214/7314 de la figure 7.

Le montage 8000 comprend un transformateur à impulsions 805 dont l'entrée est reliée à l'entrée 802 du montage 8000, et la sortie à l'entrée d'un demi-pont 810 comprenant un premier transistor de type mosfet 812 et un second transistor de type mosfet 814. Le drain du premier transistor 812 est relié à un premier condensateur à tension élevée 820, celui du second transistor 814 à un second condensateur à tension élevée 822. La source du premier transistor 812 et celle du second transistor 814 sont reliées l'une à l'autre, et à la sortie 804 du montage 8000. La boîte 830 reliée au premier condensateur 820 peut délivrer une tension de valeur +V, tandis que la boîte 832 reliée au second condensateur 822 peut délivrer une tension de valeur -V. La sortie 804 du montage 8000 permet de délivrer une tension créneau comprise entre les valeurs -V et +V. Un ajustement, manuel ou programmé, peut être intégré pour ajuster la tension de l'alimentation électrique à tension élevée, typiquement entre 50 et 300 volts.

Un circuit non représenté pilote les transistors 812 et 814.

Le montage 8000 peut opérer selon trois modes en fonction d'une commande reçue, en particulier du module de traitement 7106, par exemple sur une liaison de type RS485.

Selon un premier mode de fonctionnement, tous les éléments sont activés, et alimentés, les condensateurs à haute tension 820 et 822 sont chargés, et le montage 8000 est en attente d'un message de départ sur la liaison RS485. Il s'agit d'un état initial, lequel peut être suivi d'un mode de veille partielle dans lequel certaines parties du circuit ne sont plus alimentées et où seuls les éléments de réception de données de communication, par exemple, sont activés.

Selon un deuxième mode de fonctionnement, dit "séquence d'émission", le générateur d'impulsions 805 émet jusqu'à trois impulsions sur le pont de transistor, à une fréquence fixée par un logiciel, typiquement comprise entre 10 et 256 kilohertz.

Lorsque le premier transistor 812 est conducteur, le premier condensateur 820 est relié directement à la sortie 804, donc à la bobine d'excitation correspondante et s'y décharge avec un courant important, qui peut atteindre jusqu'à 30 ampères.

Puis, le module d'alimentation recharge le premier condensateur 820.

Lorsque le second transistor 814 est conducteur, le second condensateur 814 est relié directement à la sortie 804, donc à la bobine d'excitation correspondante et s'y décharge avec un courant important, qui peut atteindre jusqu'à 30 ampères.

Puis, le module d'alimentation recharge le second condensateur 822.

Le premier condensateur 820 et le second condensateur 822 se déchargent en décalage mutuel d'une demi-période.

La recharge du premier condensateur 820 et celle du second condensateur 822 peuvent être effectuées en parallèle l'une de l'autre.

Selon le troisième mode de fonctionnement, tous les composants sont hors tension sauf ceux qui participent à la détection des messages qui sont envoyés sur la liaison RS485.

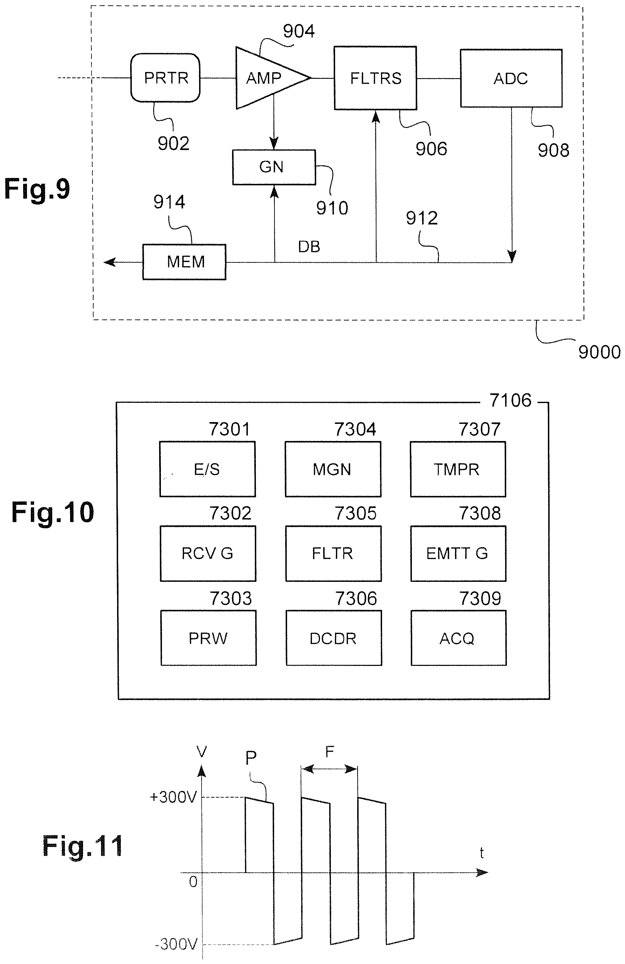

On fait référence à la figure 9.

Elle montre un circuit 9000 en tant qu'exemple de réalisation d'un circuit de réception pour une bobine d'excitation, par exemple la voie de réception 7220 ou 7320 de la figure 7.

Le circuit 9000 comprend un élément de protection contre la surtension 902 dont l'entrée est reliée à la bobine d'excitation et la sortie à l'entrée d'un amplificateur 904. Une première sortie de l'amplificateur 904 est reliée à un module de filtres programmable 906 dont la sortie est reliée à un convertisseur analogique numérique 908 de type 12 bits, 2,5 mégahertz.

L'autre sortie de l'amplificateur 904 est reliée à un module à gain programmable 910.

La sortie du convertisseur analogique numérique 908 est reliée à un bus de données 912, lui-même relié à une entrée du module de filtres programmable 906 et du module à gain programmable 910. Le module alimente, en outre, une mémoire 914, par exemple une partie de la mémoire d'un microcontrôleur, qui fait par exemple partie du module de traitement 7106. Le gain est programmable de manière numérique, par exemple jusqu'à 85 décibels.

Chacun des filtres du module à filtres 906 est de second ordre et de bande-passante comprise entre 10 et 205 kilohertz. Ces filtres sont également programmables de manière numérique.

Typiquement, la mémoire 914 comprend 128 kilomots minimum.

On fait référence à la figure 11.

Le module de traitement 7106 comprend un sous-module de transmission 7301 qui met en forme les données en vue de leur transmission et implémente le protocole de communication, un sous-module de réglage du gain en réception 7302, un module de gestion d'énergie 7303, un sous-module de magnétisation 7304 qui commande un circuit de magnétisation, par exemple le circuit 7500 de la figure 7, un sous-module de contrôle des filtres programmables 7305. Le module de traitement 7106 comprend en outre un sous-module de décodage 7306 capable d'identifier une valeur d'adresse qui lui est propre dans un message reçu, un sous-module d'acquisition de température 7307 qui interagit avec un capteur de température, par exemple le capteur 7400 de la figure 7, un sous-module d'émission 7308 qui commande des voies d'émission par exemple celles du premier circuit 7200 et du second circuit 7300 de la figure 7 et un sous-module d'acquisition 7309 qui reçoit et traite les signaux reçus des voies de réception, par exemple les voies 7220 et 7320 du premier circuit 7200 et du second circuit 7300 de la figure 7.

On fait référence à la figure 10 conjointement à la figure 11.

Le sous-module d'émission 7308 est agencé pour commander une série d'impulsions électriques P alternative d'amplitude comprise entre -300 et +300 volts et de période F. La période F est paramétrable. La forme de la série d'impulsions est également paramétrable, en particulier en ce qui concerne le réglage du nombre d'impulsions et le temps séparant deux impulsions consécutives.

Le module de gestion d'énergie 7306 est agencé pour mettre automatiquement le système en veille automatique.

L'ordinateur de traitement CPU 1000 peut être agencé pour exécuter une fonction de calibration.

Dans une première étape, l'ordinateur de traitement 1000 commande l'émission d'une série d'impulsions en un capteur de la conduite à calibrer, que l'on note capteur A. La forme de ces impulsions est par exemple conforme à la figure 10. Chaque impulsion est émise avec une première valeur de gain que l'on note valeur GEA0.

Dans une seconde étape, un capteur adjacent au capteur A, que l'on note capteur B, reçoit un signal avec une valeur de gain initiale, ou valeur GRB0. La valeur GRB0 est envoyée à l'ordinateur de traitement 1000, qui augmente, ou diminue, la valeur du gain en émission du capteur A jusqu'à ce que le gain en réception du capteur B soit voisin d'une valeur de gain prédéfinie, ou valeur GRB1.

Dans une troisième étape, l'ordinateur de traitement 1000 commande l'émission d'une série d'impulsions par le capteur B, avec un gain de valeur GEB0 qui peut être voisin de la valeur GEA0 du gain en émission. On mesure une valeur du gain en réception au niveau du capteur A, que l'on note GRA0. Pour atteindre la valeur de gain GRB0 au niveau du capteur A, on ajuste le gain en émission du capteur B. L'ajustement de chaque gain à la réception assure qu'un signal sera toujours reçu avec la même intensité et donc l'uniformité des mesures effectuées.

En variante ou en complément, l'unité de traitement 1000 peut être agencée pour exécuter une fonction de calibration.

L'unité de traitement 1000 peut en outre être configurée pour surveiller l'évolution temporelle du temps mis par l'écho pour aller du capteur A au capteur B. La variation du temps de parcourt peut être corrélée à une variation de température, ou à la vitesse de propagation des ondes, puisque du point de vue des ondes guidées, la distance D0 est fixe tout au long de la vie de la conduite. Cela permet en outre de comparer des échos entre eux, même en cas de variation de la température entre les mesures.

Les variations de température au niveau de la conduite affectent la vitesse de propagation des différents paquets d'ondes guidées. Elles peuvent conduire à une expansion ou une contraction du signal. Un tel phénomène peut causer un décalage temporel entre un signal de mesure et un signal de référence, lorsque ceux-ci sont enregistrés à des températures différentes. Par conséquent, la soustraction du signal de mesure par le signal de référence peut mener à une différence importante.

Du fait que la distance entre les capteurs est fixe, un coefficient de dilatation/compression peut être calculé entre un signal pris comme référence et un signal ultérieur, de sorte que leur différence permette de mettre en évidence l'apparition ou non d'un pic supplémentaire révélant la présence d'un défaut. On peut ainsi appliquer la méthode dite de la "soustraction optimale par étirement", ou "Optimal Stretch" en anglais.

Les méthodes pour étirer (ou comprimer) le signal afin de compenser le changement de température peuvent être appliquées sur le signal de référence ou bien le signal de mesure, afin d'obtenir une meilleur correspondance entre les deux signaux à soustraire.

L'invention n'est pas limitée aux modes de réalisation décrits plus haut, à titre d'exemple uniquement, mais englobe toutes les variantes que pourra envisager l'homme de l'art, et notamment :
- Le capteur à ondes guidées 5 peut être dépourvu de connexion électrique et comporter alors uniquement une partie passive disposée sous le revêtement 11. Une partie active est dans ce cas fixée sur le tube élémentaire 3, par exemple par clampage, au moment de l'installation de l'électronique 7 sur le tube élémentaire 3. Cette opération peut se faire par exemple juste avant la mise à l'eau pour les applications offshore.
- L'électronique 7 peut être disposée, en partie au moins, hors du revêtement 11.
- Le corps 2 peut être réalisé par assemblage de plusieurs tubes nus les uns aux autres.
- Dans certains cas, en particulier si les caractéristiques magnétostrictives du tube élémentaire 3 sont suffisantes, le capteur à ondes guidées 5 peut être dépourvu de bande magnétostrictive et/ou de bobine de magnétisation. Dans ce cas, le capteur à ondes guidées 5 peut ne comprendre qu'une bobine d'excitation.
- Dans certaines réalisations, le capteur à ondes guidées 5 peut être réalisé sous la forme d'un dépôt électrolytique ou d'un traitement localisé sur la surface extérieure du tube élémentaire 3 pour accroître localement les propriétés magnétostrictives de l'acier.
- La soudure reliant deux éléments de conduite entre eux peut opérer en tant que capteur à ondes guidées 5, lorsque cette soudure est capable de générer des ondes guidées.
- Le capteur à ondes guidées 5 peut être associé à des capteurs complémentaires tels que, par exemple, une jauge de mesure de contraintes, une jauge de température. En particulier, le capteur à ondes guidées 5 peut être associé à des capteurs à fibres optiques.
- Un élément de conduite 1 peut être réalisé en assemblant plusieurs éléments de conduite les uns aux autres. Lorsqu'un élément de conduite 1 comprend plusieurs capteurs 5, tous les capteurs 5 ne sont pas nécessairement recouverts du revêtement de protection. En particulier, les capteurs 5 les plus proches des extrémités de l'élément peuvent être laissés nus et être recouverts après soudage de ladite extrémité sur la conduite, pour des raisons de mise en place de la conduite.
- L'alimentation en énergie peut être fournie par d'autres techniques, telles que, par exemple, l'utilisation d'un gradient de température entre le fluide transporté et le milieu environnant, en application de l'effet Peltier.
- L'un au moins des câbles peut être remplacé par une ou plusieurs fibres optiques et participer au monitoring en tant que capteur supplémentaire.
- Par éléments de conduite homologue, on entend des éléments qui peuvent être mécaniquement associés les uns aux autres, et doté de capteurs et/ou d'électroniques permettant de travailler ensemble, en particulier de communiquer. Il ne s'agit pas nécessairement de capteurs et/ou d'électroniques absolument identiques.
- Lorsqu'il est doté d'une bobine active et d'une bande magnétostrictive, le capteur 5 est capable de générer des ondes guidées de part et d'autre de cette bobine, de manière symétrique. La fréquence du courant parcouru dans cette bobine correspond à la fréquence principale de l'onde émise.
- Lorsqu'il est doté de deux bobines actives et de deux bandes magnétostrictives, le capteur 5 est capable d'être mis en oeuvre selon la technique connue sous le nom de "direction control", ou "commande directionnelle" en français. Dans cette technique, les bobines actives sont distantes l'une de l'autre de lambda/4, où lambda représente la longueur de l'onde guidée que l'on prévoit d'utiliser pour le contrôle. Cela permet par construction d'annuler le signal envoyé d'un côté du capteur 5 et de doubler le signal envoyé de l'autre côté. Cette technique est avantageuse en ce qu'elle permet classiquement de localiser les défauts. Néanmoins, elle impose la fréquence d'excitation qui peut ne pas être optimale pour la détection de certains défauts.
- Ici, le capteur 5 peut n'utiliser qu'une seule bobine, excitée à toutes les fréquences comprises dans la gamme mentionnées ci-dessus. Avantageusement, on fait varier la fréquence d'excitation jusqu'à maximiser l'écho, étant donné que la longueur du défaut et l'épaisseur du revêtement 11 influent sur l'amplitude du pic généré par le défaut en fonction de la fréquence. La localisation du défaut en question est obtenue par recoupement des données d'inspection de plusieurs capteurs consécutifs.
- Selon un mode de réalisation de l'invention, illustré par exemple sur la figure 1, un élément à assembler à une conduite comprend un tube muni d'un capteur 5 situé à proximité de l'une des extrémités de ce tube. Par exemple, le capteur est disposé à 2,2 mètres de l'extrémité du tube. Selon une variante de réalisation, l'élément à assembler comprend plusieurs tubes mutuellement assemblés et comprenant chacun un capteur 5. Chaque capteur est disposé à 2,2 mètres d'une extrémité de son tube respectif, à l'exception du capteur de l'un des tubes situé à l'extrémité de l'élément, lequel capteur est disposé plus près encore de l'extrémité de ce tube. Dans ce cas, le capteur en question peut être revêtu en même temps que la soudure qui assemble l'élément à la conduite.
- Le corps profilé 3 creux de l'élément de conduite 1 peut comprendre au moins deux éléments profilés creux mutuellement assemblés.
- Une partie au moins du revêtement de protection 11 de l'élément de conduite 1 peut être disposée sous le capteur à ondes guidées 5 et/ou sous le câble électrique 9.
- Le revêtement de protection 11 peut être de type multicouches et l'une au moins desdites couches est intercalée entre le capteur à ondes guidées 5 et/ou le câble électrique 9 et la surface extérieure du corps profilé creux 3. Ladite couche peut présenter des propriétés adhésives telles qu'elle assure une fixation du capteur à ondes guidées 5 et/ou du câble électrique 9 à la surface extérieure du corps profilé creux 3, en partie au moins.
- Le câble électrique peut être enroulé autour du corps profilé creux selon une allure de spirale, de l'électronique de commande 7 jusqu'à une extrémité du corps 3 de l'élément de conduite 1
- L'électronique de commande 7 peut comprendre un premier circuit capable d'alimenter la bobine d'excitation, et un second circuit capable d'alimenter la bobine de magnétisation.
- Pour fixer au moins un câble électrique et un capteur de type à ondes guidées sur une surface périphérique d'un corps profilé creux, on peut prévoir un corps profilé creux 3 avec une surface périphérique recouverte d'un revêtement de protection à l'exception d'au moins une zone annulaire, le câble électrique étant recouvert du revêtement de protection et fixer un capteur de type à ondes guidées 5 sur la surface périphérique dudit ) corps 3, en ladite zone annulaire.

## Revendications

1. Élément (1, 1A, 1B) destiné à être monté à une extrémité d'une conduite adaptée à la circulation de fluide pour prolonger ladite conduite, l'élément (1, 1A, 1B) comprenant :
- un corps profilé creux (3, 3A, 3B) présentant une surface périphérique ;
- un revêtement de protection (11,11A, 11B) recouvrant au moins partiellement ladite surface périphérique ;
**caractérisé en ce qu'**il comprend en outre :
- un capteur de type à ondes guidées (5, 5A, 5B, 50) ;
- une électronique de commande (7, 7A, 7B, 7000) pour le capteur à ondes guidées (5, 5A, 5B, 50) ;
- au moins un câble électrique (9, 9A, 9B, 10A, 10B) agencé pour relier l'électronique de commande (7, 7A, 7B, 7000) à une électronique homologue (7, 7A, 7B, 7000) de ladite conduite ;
et **en ce que** :
- le câble électrique (9, 9A, 9B, 10A, 10B) et le capteur à ondes guidées (5, 5A, 5B, 50) sont fixés à la surface périphérique dudit corps (3, 3A, 3B), sous une partie au moins du revêtement de protection (11,11A, 11B).

2. Élément selon la revendication 1, dans lequel le revêtement de protection (11, 11A, 11B) recouvre toute la surface périphérique du corps profilé creux (3, 3A, 3B) à l'exception d'une zone voisine de chacune des extrémités longitudinales dudit corps (3, 3A, 3B).

3. Élément selon l'une des revendications précédentes, dans lequel le corps profilé creux (3, 3A, 3B) comprend au moins deux éléments profilés creux mutuellement assemblés.

4. Élément selon l'une des revendications précédentes, dans lequel une partie au moins du revêtement de protection (11, 11A, 11B) est disposée sous le capteur à ondes guidées (5, 5A, 5B, 50) et/ou sous le câble électrique (9, 9A, 9B, 10A, 10B).

5. Élément selon l'une des revendications précédentes, dans lequel le revêtement de protection (11, 11A, 11B) est de type multicouches et l'une au moins desdites couches est intercalée entre le capteur à ondes guidées (5, 5A, 5B, 50) et/ou le câble électrique (9, 9A, 9B, 10A, 10B) et la surface extérieure du corps profilé creux (3, 3A, 3B).

6. Élément selon la revendication 5, dans lequel ladite couche présente des propriétés adhésives telles qu'elle assure une fixation du capteur à ondes guidées (5, 5A, 5B, 50) et/ou du câble électrique (9, 9A, 9B, 10A, 10B) à la surface extérieure du corps profilé creux (3, 3A, 3B), en partie au moins.

7. Élément selon l'une des revendications précédentes, dans lequel le câble électrique (9, 9A, 9B, 10A, 10B) est enroulé autour du corps profilé creux selon une allure de spirale, de l'électronique de commande (7, 7A, 7B, 7000) jusqu'à une extrémité de ce corps (3, 3A, 3B).

8. Élément selon l'une des revendications précédentes, dans lequel l'électronique de commande (7, 7A, 7B, 7000) comprend un circuit d'excitation (7210, 7310, 8000) pour le capteur à ondes guidées (5, 5A, 5B, 50).

9. Élément selon l'une des revendications précédentes, dans lequel le capteur à ondes guidées (50) comprend un ensemble formé d'une bande magnétostrictive (52), d'une bobine d'excitation (56, 7206, 7208) et d'une bobine de magnétisation (54, 7600) pour la bande magnétostrictive (52).

10. Élément selon la revendication 9, dans lequel l'électronique de commande (7, 7A, 7B, 7000) comprend un premier circuit (7210, 7310, 8000) capable d'alimenter la bobine d'excitation (56, 7206, 7208), et un second circuit (7500) capable d'alimenter la bobine de magnétisation (54, 7600).

11. Conduite (PL) adaptée à la circulation de fluide comprenant des éléments (Pi-1, Pi, Pi+1) aboutés les uns aux autres et comprenant chacun un corps profilé creux présentant une surface périphérique, un revêtement de protection recouvrant au moins partiellement ladite surface périphérique, **caractérisée en ce que** certains au moins desdits éléments (Pi-1, Pi, Pi+1) sont des éléments selon la revendication 1 et **en ce que** la conduite comprend en outre des câbles électriques (BS, EL) reliant les électroniques de commande (700, 702, 704) les unes aux autres, et **en ce que** lesdits câbles électriques (BS, EL) sont fixés sur la surface périphérique d'un corps respectif, sous une partie au moins du revêtement de protection.

12. Conduite selon la revendication 11, dans laquelle certains au moins des éléments (Pi-1, Pi, Pi+1) comprenant un capteur à ondes guidées (500, 502, 504) sont immergés.

13. Procédé de fabrication d'un élément selon l'une des revendications 1 à 10, comprenant les étapes suivantes :
A. fixer au moins un câble électrique (9, 9A, 9B, 10A, 10B) et un capteur de type à ondes guidées (5, 5A, 5B, 50) sur une surface périphérique d'un corps profilé creux (3, 3A, 3B) ;
B. appliquer au moins une couche de revêtement de protection (11, 11A, 11B) sur le capteur à ondes guidées (5, 5A, 5B, 50) et le câble électrique (9, 9A, 9B, 10A, 10B) ;
C. fixer une électronique de commande (7, 7A, 7B, 7000) pour le capteur à ondes guidées (5, 5A, 5B, 50) au corps profilé creux et la relier à une extrémité de l'un au moins des câbles électriques (9, 9A, 9B, 10A, 10B).

14. Procédé selon la revendication 13, dans lequel l'étape A. comporte les opérations suivantes :
A1. prévoir un corps profilé creux (3, 3A, 3B) avec une surface périphérique recouverte d'un revêtement de protection (11, 11A, 11B) à l'exception d'au moins une zone annulaire, le câble électrique (9, 9A, 9B, 10A, 10B) étant recouvert du revêtement de protection (11, 11A, 11B) ;
A2. fixer un capteur de type à ondes guidées (5, 5A, 5B, 50) sur la surface périphérique dudit corps (3, 3A, 3B), en ladite zone annulaire.

15. Procédé pour prolonger une conduite (PL) adaptée à la circulation de fluide comprenant un élément terminal selon la revendication 11, le procédé comprenant les étapes suivantes :
A. prévoir un élément prolongateur présentant un corps profilé creux (3, 3A, 3B) présentant une surface périphérique et un revêtement de protection (11, 11A, 11B) recouvrant en partie au moins la surface périphérique, un capteur de type à ondes guidées (5, 5A, 5B, 50) et une électronique de commande (7, 7A, 7B, 7000) pour le capteur à ondes guidées (5, 5A, 5B, 50), dans lequel un câble électrique (9, 9A, 9B, 10A, 10B) est relié à l'électronique de commande(7, 7A, 7B, 7000), le câble électrique (9, 9A, 9B, 10A, 10B) et le capteur à ondes guidées (5, 5A, 5B, 50) étant fixés sur la surface périphérique dudit corps (3, 3A, 3B), sous une partie au moins du revêtement de protection (11, 11A, 11B) ;
B. souder le corps (3, 3A, 3B) de l'élément prolongateur au corps (3, 3A, 3B) de l'élément terminal ;
C. connecter le câble électrique (9, 9A, 9B, 10A, 10B) de l'élément terminal à celui de l'élément prolongateur.

16. Procédé pour former un segment de conduite (13) selon la revendication 11, le procédé comprenant les étapes suivantes :
A. prévoir deux éléments de conduite homologues (1A, 1B) présentant chacun un corps profilé creux (3A, 3B) présentant une surface périphérique, un revêtement de protection (11A, 11B) recouvrant au moins partiellement ladite surface périphérique, au moins un câble électrique (9A, 10B) et un capteur de type à ondes guidées (5A, 5B), le câble électrique (9A, 10B) et le capteur à ondes guidées (5A, 5B) étant fixés sur la surface périphérique dudit corps (3A, 3B), sous une partie au moins du revêtement de protection (11A, 11B) ;
B. souder le corps (3A, 3B) de l'un des éléments homologues (1A, 1B) au corps (3A, 3B) de l'autre de ces éléments (1A, 1B) ;
C. connecter le câble électrique (9A, 10B) de chacun des éléments de conduite homologues (1A, 1B) entre eux, ou le câble (9A, 10B) de l'un des éléments de conduite homologues (1A, 1B) à une l'électronique de commande (7A, 7B) de l'autre de ces éléments (1A, 1B), en une partie de ce câble détachée du corps (3A, 3B) et/ou qui dépasse du revêtement de protection (11A, 11B).

## Patentansprüche

1. Element (1, 1A, 1B), das auf einem Ende einer für die Durchführung von Fluiden geeignete Rohrleitung montiert werden kann, um diese Rohrleitung zu verlängern, wobei das Element (1, 1A, 1B) umfasst:
- einen Hohlprofilkörper (3, 3A, 3B) mit einer Umfangsfläche;
- eine Schutzschicht (11, 11A, 11B), die zumindest einen Teil der Umfangsfläche bedeckt,
**dadurch gekennzeichnet, dass** sie außerdem umfasst:
- einen geführten Wellensensor (5, 5A, 5B, 50);
- eine Steuerelektronikeinheit (7, 7A, 7B, 7000) für den geführten Wellensensor (5, 5A, 5B, 50);
- mindestens ein Stromkabel (9, 9A, 9B, 10A, 10B), durch dessen Beschaffenheit die Steuerelektronikeinheit (7, 7A, 7B, 7000) mit einer gleichen Elektronikeinheit (7, 7A, 7B, 7000) dieser Leitung verbunden wird;
und **dadurch gekennzeichnet, dass**:
- das Stromkabel (9, 9A, 9B, 10A, 10B) und der geführte Wellensensor (5, 5A, 5B, 50) werden auf der Umfangsfläche dieses Körpers (3, 3A, 3B) unter zumindest einem Teil der Schutzschicht (11, 11A, 11B) befestigt.

2. Element nach Anspruch 1, wobei die Schutzschicht (11, 11A, 11B) die gesamte Umfangsfläche des Hohlprofilkörpers bedeckt (3, 3A, 3B), mit Ausnahme eines Bereichs neben jedem Längsende dieses Körpers (3, 3A, 3B).

3. Element nach einem der vorstehenden Ansprüche, bei dem der Hohlprofilkörper (3, 3A, 3B) mindestens zwei miteinander montierte Hohlprofilkörper umfasst.

4. Element nach einem der vorstehenden Ansprüche, bei dem zumindest ein Teil der Schutzschicht (11, 11A, 11B) unter dem geführten Wellensensor (5, 5A, 5B, 50) und/oder dem Stromkabel (9, 9A, 9B, 10A, 10B) angeordnet ist.

5. Element nach einem der vorstehenden Ansprüche, bei dem die Schutzschicht (11, 11A, 11B) aus mehreren Lagen besteht und mindestens eine dieser Lagen zwischen dem geführten Wellensensor (5, 5A, 5B, 50) und/oder dem Stromkabel (9, 9A, 9B, 10A, 10B) und der Außenfläche des Hohlprofilkörpers (3, 3A, 3B) angeordnet ist.

6. Element nach dem Anspruch 5, bei dem diese Schicht Klebeeigenschaften aufweist, mit denen eine zumindest teilweise Befestigung des geführten Wellensensors (5, 5A, 5B, 50) und/oder des Stromkabels (9, 9A, 9B, 10A, 10B) auf der Außenfläche des Hohlprofilkörpers (3, 3A, 3B) sichergestellt wird.

7. Element nach einem der vorstehenden Ansprüche, bei dem das Stromkabel (9, 9A, 9B, 10A, 10B) von der Steuerelektronikeinheit (7, 7A, 7B, 7000) bis zu einem Ende dieses Körpers (3, 3A, 3B) in Spiralform um den Hohlprofilkörper gewickelt wird.

8. Element nach einem der vorstehenden Ansprüche, in dem die Steuerelektronikeinheit (7, 7A, 7B, 7000) einen Ansteuerungsschaltkreis (7210, 7310, 8000) für den geführten Wellensensor (5, 5A, 5B, 50) umfasst.

9. Element nach einem der vorstehenden Ansprüche, bei dem der geführte Wellensensor (50) eine Baugruppe umfasst, die aus einem magnetostriktiven Streifen (52), einer Relaisspule (56, 7206, 7208) und einer Magnetisierungsspule (54, 7600) für den magnetostriktiven Streifen (52) besteht.

10. Element nach Anspruch 9, bei dem die Steuerelektronikeinheit (7, 7A, 7B, 7000) einen ersten Schaltkreis (7210, 7310, 8000) umfasst, mit dem die Relaisspule (56, 7206, 7208) versorgt werden kann, sowie einen zweiten Schaltkreis (7500), der die Magnetisierungsspule (54, 7600) versorgen kann.

11. Für den Transport von Fluiden geeignete Rohrleitung (PL), die aus Elementen (Pi-1, Pi, Pi+1) besteht, die aneinanderstoßen und jeweils einen Hohlprofilkörper mit einer Umfangsfläche und eine Schutzschicht für die zumindest teilweise Abdeckung der Umfangsfläche aufweisen, **dadurch gekennzeichnet, dass** einige dieser Elemente (Pi-1, Pi, Pi+1) Elemente gemäß Anspruch 1 sind und die Rohrleitung außerdem Stromkabel (BS, EL) umfasst, welche die Steuerelektronikeinheiten (700, 702, 704) miteinander verbinden, und dass dieses Stromkabel (BS, EL) auf der Umfangsfläche eines jeweiligen Körpers unter zumindest einem Teil der Schutzschicht angebracht sind.

12. Rohrleitung nach Anspruch 11, bei der zumindest einige der Elemente (Pi-1, Pi, Pi+1) einschließlich einem geführten Wellensensor (500, 502, 504) eingetaucht sind.

13. Herstellungsverfahren eines Elements nach einem der Ansprüchen 1 bis 10, das die folgenden Schritte umfasst:
A. Befestigen zumindest eines Stromkabels (9, 9A, 9B, 10A, 10B) und eines geführten Wellensensors (5, 5A, 5B, 50) auf der Umfangsfläche eines Hohlprofilkörpers (3, 3A, 3B);
B. Aufbringen mindestens einer Schutzschicht (11, 11A, 11B) auf dem geführten Wellensensor (5, 5A, 5B, 50) und dem Stromkabel (9, 9A, 9B, 10A, 10B);
C. Befestigen einer Steuerelektronikeinheit (7, 7A, 7B, 7000) für den geführten Wellensensor (5, 5A, 5B, 50) auf dem Hohlprofilkörper und Verbindung mit einem Ende von mindestens einem der Stromkabel (9, 9A, 9B, 10A, 10B).

14. Verfahren nach Anspruch 13, bei dem Schritt A die folgenden Abläufe umfasst:
Al: Bereitstellung eines Hohlprofilkörpers (3, 3A, 3B) mit einer Umfangsfläche, die von einer Schutzschicht (11, 11A, 11B) bedeckt ist, mit Ausnahme mindestens eines ringförmigen Bereichs, dem Stromkabel (9, 9A, 9B, 10A, 10B), das mit der Schutzschicht (11, 11A, 11B) bedeckt ist;
A2. Befestigen eines geführten Wellensensors (5, 5A, 5B, 50) auf der Umfangsfläche dieses Körpers (3, 3A, 3B) in diesem ringförmigen Bereich.

15. Verfahren zur Verlängerung einer für den Transport von Fluiden geeigneten Rohrleitung (PL), die ein Endelement nach Anspruch 11 umfasst, wobei das Verfahren die folgenden Schritte umfasst:
A. Bereitstellung eines Verlängerungselements mit Hohlprofilkörper (3, 3A, 3B), der eine Umfangsfläche und eine Schutzschicht (11, 11A, 11B) aufweist, die zumindest einen Teil der Umfangsfläche bedeckt, ein geführter Wellensensor (5, 5A, 5B, 50) und eine Steuerelektronikeinheit (7, 7A, 7B, 7000) für den geführten Wellensensor (5, 5A, 5B, 50), in der ein Stromkabel (9, 9A, 9B, 10A, 10B) mit der Steuerelektronikeinheit (7, 7A, 7B, 7000) verbunden ist und das Stromkabel (9, 9A, 9B, 10A, 10B) und der geführten Wellensensor (5, 5A, 5B, 50) auf der Umfangsfläche des Körpers (3, 3A, 3B) unter zumindest einem Teil der Schutzschicht (11, 11A, 11B) angebracht sind;
B. Verschweißen des Körpers (3, 3A, 3B) des Verlängerungselements mit dem Körper (3, 3A, 3B) des Endelements;
C. Verbinden des Stromkabels (9, 9A, 9B, 10A, 10B) des Endelements mit dem des Verlängerungselements.

16. Verfahren zur Formung eines Rohrleitungsabschnitts (13) nach Anspruch 11, wobei das Verfahren die folgenden Schritte umfasst:
A. Bereitstellung zweier gleicher Rohrleitungselemente (1A, 1B), die beide einen Hohlprofilkörper (3A, 3B) mit Umfangsfläche, eine Schutzschicht (11A, 11B) für zumindest einen Teil dieser Umfangsfläche, mindestens ein Stromkabel (9A, 10B) und einen geführten Wellensensor (5A, 5B) umfassen, wobei das Stromkabel (9A, 10B) und der geführte Wellensensor (5A, 5B) auf der Umfangsfläche dieses Körpers (3A, 3B) unter zumindest einem Teil der Schutzschicht (11 A, 11B) angebracht sind;
B. Verschweißen des Körpers (3A, 3B) eines der gleichen Elemente (1A, 1B) am Körper (3A, 3B) des jeweils anderen dieser Elemente (1A, 1B);
C. Verbinden des Stromkabels (9A, 10B) jeder der gleichen Rohrleitungselemente (1A, 1B) untereinander oder des Kabels (9A, 10B) eines der entsprechenden Rohrleitungselemente (1A, 1B) mit einer Steuerelektronikeinheit (7A, 7B) des anderen dieser Elemente (1A, 1B) mit einem Teil dieses Ersatzkabels des Körpers (3A, 3B) und/oder das die Schutzschicht (11A, 11B) durchdringt.

## Claims

1. An element (1, 1A, 1B) intended to be mounted at one end of a pipeline suitable for the circulation of fluid in order to extend said pipeline, the element (1, 1A, 1B) comprising:
- a hollow profiled body (3, 3A, 3B) having a peripheral surface;
- a protective covering (11, 11A, 11B) at least partially covering said peripheral surface;
**characterised in that** it further comprises:
- a sensor of guided wave type (5, 5A, 5B, 50);
- control electronics (7, 7A, 7B, 7000) for the guided wave sensor (5, 5A, 5B, 50);
- at least one electrical cable (9, 9A, 9B, 10A, 10B) arranged to connect the control electronics (7, 7A, 7B, 7000) to homologous electronics (7, 7A, 7B, 7000) of said pipeline;
and **in that**:
- the electrical cable (9, 9A, 9B, 10A, 10B) and the guided wave sensor (5, 5A, 5B, 50) are attached to the peripheral surface of said body (3, 3A, 3B), under at least one portion of the protective covering (11, 11A, 11B).

2. An element according to claim 1, wherein the protective covering (11, 11 A, 11B) covers the entire peripheral surface of the hollow profiled body (3, 3A, 3B) except for an area adjacent to each of the longitudinal ends of said body (3, 3A, 3B).

3. An element according to one of the preceding claims, wherein the hollow profiled body (3, 3A, 3B) comprises at least two mutually assembled hollow profiled elements.

4. An element according to one of the preceding claims, wherein at least one portion of the protective covering (11, 11A, 11B) is arranged under the guided wave sensor (5, 5A, 5B, 50) and/or under the electrical cable (9, 9A, 9B, 10A, 10B).

5. An element according to one of the preceding claims, wherein the protective covering (11, 11 A, 11B) is of multi-layer type and at least one of said layers is inserted between the guided wave sensor (5, 5A, 5B, 50) and/or the electrical cable (9, 9A, 9B, 10A, 10B) and the external surface of the hollow profiled body (3, 3A, 3B).

6. An element according to claim 5, wherein said layer has adhesive properties such that it provides attachment of the guided wave sensor (5, 5A, 5B, 50) and/or of the electrical cable (9, 9A, 9B, 10A, 10B) to the external surface of the hollow profiled body (3, 3A, 3B), at least partially.

7. An element according to one of the preceding claims, wherein the electrical cable (9, 9A, 9B, 10A, 10B) is spirally wound around the hollow profiled body, from the control electronics (7, 7A, 7B, 7000) up to one end of said body (3, 3A, 3B).

8. An element according to one of the preceding claims, wherein the control electronics (7, 7A, 7B, 7000) comprise an excitation circuit (7210, 7310, 8000) for the guided wave sensor (5, 5A, 5B, 50).

9. An element according to one of the preceding claims, wherein the guided wave sensor (50) comprises an assembly formed of a magnetostrictive strip (52), an excitation coil (56, 7206, 7208) and a magnetisation coil (54, 7600) for the magnetostrictive strip (52).

10. An element according to claim 9, wherein the control electronics (7, 7A, 7B, 7000) comprise a first circuit (7210, 7310, 8000) capable of supplying power to the excitation coil (56, 7206, 7208), and a second circuit (7500) capable of supplying power to the magnetisation coil (54, 7600).

11. A pipeline (PL) suitable for the circulation of fluid comprising elements (Pi-1, Pi, Pi+1) joined together end to end and each comprising a hollow profiled body having a peripheral surface, a protective covering at least partially covering said peripheral surface, **characterised in that** at least some of said elements (Pi-1, Pi, Pi+1) are elements according to claim 1 and **in that** the pipeline further comprises electrical cables (BS, EL) connecting the control electronics (700, 702, 704) to one another, and **in that** said electrical cables (BS, EL) are attached on the peripheral surface of a respective body, under at least one portion of the protective covering.

12. A pipeline according to claim 11, wherein at least some of the elements (Pi-1, Pi, Pi+1) comprising a guided wave sensor (500, 502, 504) are submerged.

13. A method for manufacturing an element according to one of claims 1 to 10, comprising the following steps:
A. attaching at least one electrical cable (9, 9A, 9B, 10A, 10B) and a sensor of guided wave type (5, 5A, 5B, 50) on a peripheral surface of hollow profiled body (3, 3A, 3B);
B. applying at least one layer of protective covering (11, 11A, 11B) to the guided wave sensor (5, 5A, 5B, 50) and the electrical cable (9, 9A, 9B, 10A, 10B);
C. attaching control electronics (7, 7A, 7B, 7000) for the guided wave sensor (5, 5A, 5B, 50) to the hollow profiled body and connecting same to one end of at least one of the electrical cables (9, 9A, 9B, 10A, 10B).

14. A method according to claim 13, wherein step A. comprises the following operations:
A1. providing a hollow profiled body (3, 3A, 3B) with a peripheral surface covered with a protective covering (11, 11 A, 11B) except for at least one annular area, the electrical cable (9, 9A, 9B, 10A, 10B) being covered with the protective covering (11, 11A, 11B);
A2. attaching a sensor of guided wave type (5, 5A, 5B, 50) on the peripheral surface of said body (3, 3A, 3B), in said annular area.

15. A method for extending a pipeline (PL) suitable for the circulation of fluid comprising a terminal element according to claim 11, the method comprising the following steps:
A. providing an extension element having a hollow profiled body (3, 3A, 3B) having a peripheral surface and a protective covering (11, 11 A, 11B) at least partially covering the peripheral surface, a sensor of guided wave type (5, 5A, 5B, 50) and control electronics (7, 7A, 7B, 7000) for the guided wave sensor (5, 5A, 5B, 50), wherein an electrical cable (9, 9A, 9B, 10A, 10B) is connected to the control electronics (7, 7A, 7B, 7000), the electrical cable (9, 9A, 9B, 10A, 10B) and the guided wave sensor (5, 5A, 5B, 50) being attached on the peripheral surface of said body (3, 3A, 3B), under at least one portion of the protective covering (11, 11 A, 11B);
B. welding the body (3, 3A, 3B) of the extension element to the body (3, 3A, 3B) of the terminal element;
C. connecting the electrical cable (9, 9A, 9B, 10A, 10B) of the terminal element to that of the extension element.

16. A method for forming a pipeline segment (13) according to claim 11, the method comprising the following steps:
A. providing two homologous pipeline elements (1A, 1B) each having a hollow profiled body (3A, 3B) having a peripheral surface, a protective covering (11A, 11B) at least partially covering said peripheral surface, at least one electrical cable (9A, 10B) and a sensor of guided wave type (5A, 5B), the electrical cable (9A, 10B) and the guided wave sensor (5A, 5B) being attached on the peripheral surface of said body (3A, 3B), under at least one portion of the protective covering (11 A, 11B);
B. welding the body (3A, 3B) of one of the homologous elements (1A, 1B) to the body (3A, 3B) of the other of said elements (1A, 1B);
C. connecting the electrical cable (9A, 10B) of each of the homologous pipeline elements (1A, 1B) with one another, or the cable (9A, 10B) of one of the homologous pipeline elements (1A, 1B) to control electronics (7A, 7B) of the other of said elements (1A, 1B), in a portion of said cable that is detached from the body (3A, 3B) and/or which protrudes from the protective covering (11A, 11B).
